# FASCICULE DE BREVET EUROPEEN

(11) **EP 4 457 077 B1**
(45) Date de publication et mention de la délivrance du brevet: **02.07.2025**
(21) Numéro de dépôt: 22844210.9
(22) Date de dépôt: 27.12.2022
(51) Int. Cl.: B29C 49/64, B29C 49/78, B29C 35/08, B29C 49/06

(54) **PROCEDE DE REGULATION D'UNE UNITE DE CHAUFFAGE D'UNE INSTALLATION DE PRODUCTION DE RECIPIENTS**
VERFAHREN ZUR REGELUNG EINER HEIZEINHEIT IN EINER ANLAGE ZUR HERSTELLUNG VON BEHÄLTERN
METHOD FOR REGULATING A HEATING UNIT IN A FACILITY FOR PRODUCING CONTAINERS

(30) Priorité: 30.12.2021 FR 2114703
(43) Date de publication de la demande: 06.11.2024
(73) Titulaire: Sidel Participations, 76930 Octeville-sur-Mer (FR)
(72) Inventeur: GENDRE, Julien, 76930 Octeville-sur-Mer (FR); PROTAIS, Pierrick, 76930 Octeville-sur-Mer (FR); DELAUNAY, Arnaud, 76930 Octeville-sur-Mer (FR)
(74) Mandataire: Sidel Group
(86) Numéro de dépôt international: PCT/EP2022/087891
(87) Numéro de publication internationale: WO 2023/126408

(56) Documents cités:
- EP-B1- 2 425 959
- EP-B1- 2 720 842
- US-A1- 2020 307 064
- US-B2- 7 887 742

## Description

**Domaine technique de l'invention** : L'invention concerne le domaine de la fabrication de récipients (notamment bouteilles, flacons) par formage à partir de préformes en matière plastique, telle que par exemple le polyéthylène téréphtalate (PET).

La fabrication de tels récipients est réalisée dans une installation comprenant une unité de chauffage et une unité de formage, équipée d'une succession de moules à l'empreinte du modèle de récipient à former et de dispositifs d'injection correspondant.

La fabrication comporte deux phases principales, à savoir une phase de chauffe des préformes, au cours de laquelle une succession de préformes est chauffée à une température de référence à laquelle les préformes sont dans un état malléable dans lequel elles peuvent être formées, et une phase de formage, au cours de laquelle les préformes chauffées sont transférées chacune dans un moule du poste de soufflage 8 et un fluide sous pression est injecté dans chaque préforme par le dispositif d'injection aussi appelé tuyère correspondant pour conférer à la préforme la forme finale du récipient. Le fluide sous pression est par exemple un gaz, tel que de l'air. Le formage inclut généralement une phase d'étirage réalisée au moyen d'une tige 13 d'étirage mobile agencée pour appliquer une force d'étirage sur le fond d'une préforme dans un moule afin d'étirer la préforme selon son axe, ce qui contribue à maintenir la préforme centrée par rapport au moule.

Par ailleurs, une installation de production comprend généralement une console de commande à partir de laquelle de nombreux paramètres peuvent être ajustés manuellement dans l'unité de chauffage, par exemple : température de chauffe, la cadence machine qui modifie la vitesse de défilement des préformes, puissance d'une ventilation assurant l'évacuation d'une partie de la chaleur ;

Cette opération est fastidieuse et longue à mettre en œuvre et nécessite la présence d'un opérateur ayant une bonne connaissance de l'installation de production et des modèles de préformes susceptibles d'être introduites dans l'installation afin d'obtenir un récipient avec une bonne répartition matière sur toute sa hauteur correspondant au cahier des charges du client.

**Arrière-plan technique** : Afin de pallier à cet inconvénient, le brevet Européen EP1998950 (KHS) décrit une installation de production qui comprend un procédé de régulation des paramètres de chauffage du four, notamment de régulation des variations de la puissance électrique des sources de rayonnement, en fonction de l'épaisseur de la paroi du récipient formé.

Cependant, cette modification des paramètres de chauffage du four peut entraîner une modification du conditionnement thermique de la préforme pendant la production et ainsi engendrer une non-conformité du récipient formé vis-à-vis du cahier des charge du client. Par ailleurs, la non-conformité du récipient formé grève les coûts de fabrication et peut nécessiter l'arrêt de l'installation grevant encore plus les coûts de fabrication.

**Résumé de l'invention** : L'invention vise à apporter une véritable solution pratique au problème exposé ci-dessus, en proposant un procédé permettant de modifier le conditionnement thermique des préformes, d'une part, sans être obligé d'arrêter l'installation de production, et, d'autre part, en maintenant la qualité des récipients produits pendant la production des récipients.

A cet effet, il est proposé, en premier lieu, un procédé de production de récipients en matériau thermoplastique à partir de préformes, qui définit un trajet de circulation des préformes et des récipients, qui comprend :
- une unité de formage de récipients d'axe vertical comprenant au moins un poste de soufflage incluant chacun un moule à l'empreinte d'un récipient et un dispositif d'injection d'un fluide sous pression dans la préforme ;
- une unité de chauffe de préformes située sur le trajet de circulation en amont de l'unité de formage par rapport au sens de circulation des préformes comprenant :
   - un moyen de convoyage des préformes comprenant une pluralité de supports individuels pour les préformes définissant un trajet de chauffe des préformes ;
   - une cavité de chauffe comprenant deux parois latérales face à face et distantes l'une de l'autre et au moins l'une de ces parois étant celle qui supporte plusieurs sources de rayonnement disposées les unes au-dessus des autres et les unes à côté des autres en regard des préformes définissant ainsi une ligne de sources de rayonnement par rapport au trajet de chauffe des préformes ;
   - une alimentation électrique fournissant chaque source de rayonnement en puissance électrique ;
   - une unité de contrôle reliée à l'alimentation électrique, cette unité de contrôle ayant une mémoire dans laquelle sont enregistrée :
      - au moins une consigne de puissance électrique pour au moins une ligne de sources de rayonnement ;
      - au moins une consigne d'épaisseur en au moins un point du récipient ;
      - l'unité de contrôle met en œuvre au moins une mesure d'épaisseur d'une paroi du récipient en au moins un point dudit récipient au moyen d'au moins un capteur ;

L'unité de contrôle compare la mesure d'épaisseur à la consigne d'épaisseur enregistrée, si l'épaisseur mesurée est différente de la consigne d'épaisseur alors l'unité de contrôle modifie la puissance électrique d'au moins deux lignes de sources de rayonnement tout en maintenant identique la somme des puissances électrique alimentant toutes les lignes de sources de rayonnement.

Selon d'autres étapes du procédé de production selon l'invention, l'unité de contrôle :
- modifie ladite puissance électrique d'au moins deux lignes de sources de rayonnement de façon homogène ;
- augmente d'une valeur déterminée la puissance électrique sur une ligne alors l'unité de contrôle diminue la puissance électrique sur les lignes restantes de la valeur déterminée, divisée par le nombre de ligne(s) restante(s) ;
- diminue d'une valeur déterminée la puissance électrique sur une ligne alors l'unité de contrôle augmente la puissance électrique sur les lignes restantes de la valeur déterminée, divisée par le nombre de ligne restante ;

Sur une ligne de sources de rayonnement, si au moins une source de rayonnement fonctionne à sa puissance électrique maximale et si au moins une source de rayonnement est éteinte sur la même ligne, alors l'unité de contrôle allume l'une des sources de rayonnement qui était éteinte et diminue la puissance électrique de chaque source de rayonnement de la ligne tout en maintenant la somme des puissances électrique alimentant la ligne de sources de rayonnement constante ;

Si au moins une source de rayonnement fonctionne à une puissance électrique « minimum efficace », alors l'unité de contrôle éteint l'une des sources de rayonnement et augmente la puissance électrique de chaque source de rayonnement de la ligne tout en maintenant la somme des puissances électrique alimentant la ligne de sources de rayonnement constante ;

Selon d'autres caractéristiques du procédé de production selon l'invention, les sources de rayonnement sont :
- des lampes halogènes émettant dans les IR ;
- des diodes laser émettant dans les IR ;

Il est proposé, en second lieu, un produit programme d'ordinateur comprenant une séquence d'instructions qui, lorsque le programme est exécuté par un ordinateur, conduit celui-ci à mettre en œuvre les étapes du procédé.

**Brève description des figures** : D'autres caractéristiques et avantages de l'invention apparaitront au cours de la lecture de la description détaillée qui va suivre pour la compréhension de laquelle on se reportera aux dessins annexés que nous décrivons brièvement par la suite.
[Fig.1] la figure 1 est une vue générale de dessus d'une installation de production
[Fig.2] la figure 2 est une vue latérale schématique d'une unité de chauffage et d'un poste de soufflage 8 ;
[Fig.3] la figure 3 est une configuration schématique d'une unité de chauffage montrant l'état des sources de rayonnement.

**Description détaillée de l'invention** : Dans la suite de la description, des éléments présentant une structure identique ou des fonctions analogues seront désignés par une même référence.

On a représenté schématiquement aux figures, des installations de production en série de récipients 4 en matériau thermoplastique à partir de préformes 2.

Dans la suite de la description, les préformes 2 et les récipients 4 se déplacent dans l'installation de production le long d'un trajet de circulation depuis l'amont vers l'aval. Les préformes 2 sont déplacées en file le long d'un trajet de chauffe par des moyens de convoyage qui seront détaillés par la suite.

De manière non limitative, les récipients 4 sont ici des bouteilles. Le matériau thermoplastique est par exemple ici formé par du polyéthylène téréphtalate, désigné par la suite sous son acronyme "PET".

On a représenté à la figure un exemple d'une telle préforme 2. La préforme 2 présente un axe "X" principal représenté verticalement à la figure. Elle présente un corps 5 cylindrique à paroi tubulaire fermé à l'une de ses extrémités axiales par un fond 3, et qui est ouvert à son autre extrémité par un col 7, lui aussi tubulaire. A sa base, le col 7 présente ici une collerette 9 servant à son transport dans l'installation de production.

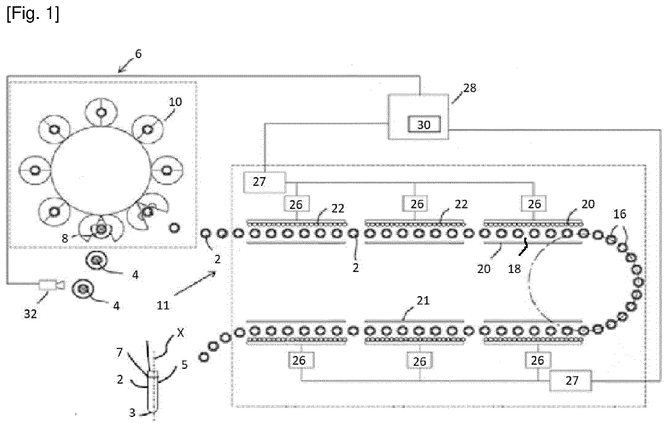

Comme représenté en détail à la figure 1, la paroi est délimitée par une face externe et par une face interne. Le col 7 présente généralement sa forme définitive tandis que le corps 5 de la préforme 2 est destiné à subir une déformation relativement importante pour former le récipient 4 final lors d'une étape de formage.

Comme représenté à la figure 1, l'installation de production comprend au moins une unité de formage 6, une unité de chauffage 11 et une unité de contrôle 28 de l'installation de production, qui comprend notamment un calculateur (ou processeur), une mémoire 30 et une console (ou interface graphique), non représentée, pour l'interaction avec un opérateur.

L'unité de formage 6 de récipients 4 est formée par une roue de formage déplaçant en rotation une pluralité de postes de formage d'une entrée à une sortie, à laquelle une succession de récipients 4 formés à partir des préformes 2 est extraite, comme représenté sur la figure. 1. L'axe de rotation de la roue de formage est, par exemple, sensiblement parallèle à l'axe principal X des préformes lorsqu'elles sont transportées par la roue de formage.

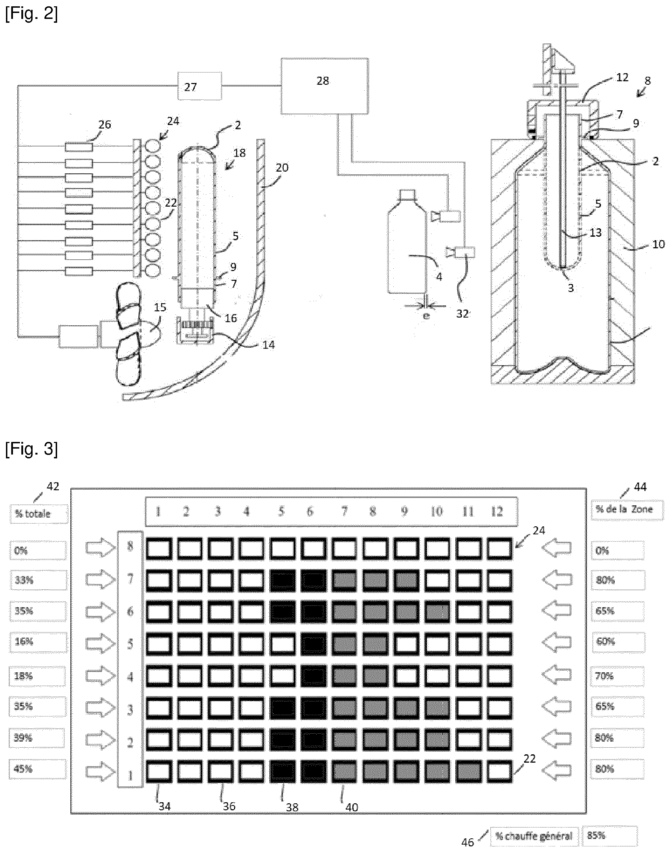

Chaque poste de soufflage 8 comprend un moule 10 formant une cavité de moulage présentant la forme du récipient 4 à former et agencé pour recevoir une préforme 2 de façon que le corps 5 de la préforme s'étende dans la cavité de moulage, comme représenté sur la Figure. 2. Chaque moule 10 est formé de plusieurs parties mobiles entre une position ouverte, dans laquelle le moule 10 peut recevoir une préforme et libérer un récipient 4, respectivement à l'entrée et à la sortie, et une position fermée, dans laquelle la cavité de moulage est fermée sur la préforme entre l'entrée et la sortie. Lorsqu'une préforme est reçue dans le moule 10, le corps 5 s'étend dans la cavité de moulage et le col 7 s'étend en saillie du moule 10 en dehors de la cavité de moulage, comme représenté sur la figure. 2.

Chaque poste de soufflage 8 comprend en outre un dispositif d'injection 12 agencé pour injecter un fluide dans le volume interne de la préforme placée dans le moule 10 du poste de soufflage 8 de sorte que le fluide déforme la préforme et que celle-ci acquière la forme de la cavité de moulage, c'est-à-dire que la préforme 2 soit formée en récipient 4 sous l'action du fluide. Selon un mode de réalisation, le fluide est par exemple un gaz pressurisé, par exemple de l'air sous pression. Dans ce cas, le dispositif d'injection 12 est formé par une tuyère et d'une ou plusieurs vannes permettant de contrôler l'injection du fluide dans la préforme 2. La pression à laquelle le fluide est injecté est réglable. A titre d'exemple et façon connue, l'installation de formage comprend un réservoir d'air sous pression à une première pression et un autre réservoir d'air sous pression à une deuxième pression, les vannes permettant d'injecter sélectivement l'air à la première pression ou à la deuxième pression.

Selon un mode de réalisation, représenté sur la figure. 2, chaque poste de soufflage 8 comprend en outre une tige 13 d'étirage mobile par rapport au moule 10 selon une direction confondue avec l'axe principal X de la préforme 2 lorsqu'elle est placée dans le moule 10. La tige 13 d'étirage est agencée pour exercer un appui sur le fond 3 de la préforme afin d'étendre celle-ci selon la direction axiale. Plus particulièrement, la tige 13 d'étirage étend la préforme jusqu'à ce que le fond 3 de la préforme entre en contact avec le fond de la cavité de moulage. Le déplacement de la tige 13 d'étirage est commandé par un actionneur soit mécanique de type vérin commandé par un système de came et de galet ou soit par un actionneur électrique de type moteur linéaire.

L'unité de formage 6 est pilotée de manière automatique par une unité de contrôle 28.

L'unité de chauffage 11 aussi appelé four permet de chauffer une succession de préformes 2 à une température de référence, après son paramétrage, comme cela sera décrit ultérieurement. La température de référence est choisie pour que le corps 5 de chaque préforme 2 en sortie d'unité de chauffage 11 soit dans un état malléable permettant une déformation du corps 5 de la préforme chauffée afin de former le récipient 4 dans l'unité de formage 6. La température de référence est comprise entre la température de transition vitreuse et la température de cristallisation de la matière plastique de la préforme 2. Dans le cas du PET, la température de référence est par exemple voisine de 110°. La valeur de la température de référence peut varier en fonction du produit avec lequel le récipient 4 va être rempli ou en fonction de la technique de remplissage du récipient. Ainsi, la température de référence est différente pour un remplissage à chaud ou pour un produit carbonaté par exemple. On notera que la température de référence correspond à la température à un endroit de référence de la préforme 2, c'est-à-dire en une zone localisée. En effet, la préforme n'est pas nécessairement chauffée à une température uniforme mais peut présenter un profil de température faisant varier la température de la préforme sur sa hauteur en fonction de la répartition matière que l'on souhaite au niveau du récipient 4.

Selon le mode de réalisation représenté sur la figure. 1, l'unité de chauffage 11 est un four à défilement, dans lequel les préformes sont transportées pour être exposées à une pluralité de sources de rayonnement 22 de chauffage. A cet effet, l'unité de chauffage 11 comprend un moyen de convoyage 14 des préformes 2 au travers de l'unité de chauffage 11 selon un trajet de chauffage s'étendant entre une entrée et une sortie de l'unité de chauffage 11.

Comme représenté aux figures.1 et 2, le moyen de convoyage 14 comprend une succession de supports 16, chacun étant apte à supporter une préforme 2, montés sur une chaîne, se déplaçant le long du trajet de chauffe dans l'unité de chauffage 11.

Dans un autre mode de réalisation non représenté, le moyen de convoyage 14 comprend par exemple une succession de supports 16, chacun étant apte à supporter une préforme, montés sur une navette de type moteur linéaire circulant sur une boucle fermée magnétique. Le mouvement de chacune de ces navettes étant commandé indépendamment les unes des autres par l'unité de contrôle 28.

Chaque support 16 est par exemple apte à recevoir une préforme 2 par emmanchement du col sur le support 16, comme représenté sur la figure. 2. Chaque support 16 est par exemple mobile en rotation par rapport à la chaine autour d'un axe de rotation confondu avec l'axe principal X d'une préforme 2 lorsque celle-ci est supportée par le support 16. Les sources de rayonnement 22 de chauffage sont distribuées de façon matricielle (comme représenté sur la figure 3) le long du trajet de chauffe et selon une direction transversale par rapport au trajet, la direction transversale étant sensiblement parallèle à l'axe principal X des préformes lorsqu'elles sont supportées par les supports 16.

L'unité de chauffe 11 comprend également une cavité de chauffe 18 qui comprend deux parois 20 latérales face à face et distantes l'une de l'autre et au moins l'une de ces parois 20 étant celle qui supporte plusieurs sources de rayonnement 22 disposées les unes au-dessus des autres et les unes à côté des autres en regard des préformes définissant ainsi une ligne 24 de sources de rayonnement 22 par rapport au trajet de chauffe des préformes.

En d'autres termes, l'unité de chauffage 11 comprend une pluralité de sources de rayonnement 22 répartis le long du trajet de chauffe et selon une hauteur de préforme de sorte que toute la hauteur du corps 5 de chaque préforme est exposée aux sources de rayonnement 22 sur le trajet de la préforme dans l'unité de chauffage 11. En faisant tourner les préformes autour de leur axe principal X, les supports 16 permettent d'exposer uniformément tout le corps 5 des préformes aux sources de rayonnement 22. Les sources de rayonnement 22 peuvent être réparties sur un côté seulement de ce trajet, auquel cas une paroi réfléchissante 21 peut être disposée de l'autre côté du trajet de chauffage pour réfléchir la chaleur vers les préformes.

Dans un autre mode de réalisation non représenté, les sources de rayonnement 22 peuvent être réparties de part et d'autre du trajet de chauffage.

Il convient de noter que des sources de rayonnement 22 sont agencées, le cas échéant, pour soumettre le corps 5 de la préforme 2 aux radiations définissant ainsi un profil de température approprié à travers la paroi de la préforme de l'extérieur vers l'intérieur. On peut fondamentalement supposer que les zones de la préforme avec une température plus basse conduisent à des parois plus épaisses du récipient 4 moulé, tandis que les zones plus chaudes de la préforme sont plus étirées pendant l'opération de soufflage et conduisent ainsi à une paroi plus mince du récipient 4.

Il convient également de noter que les sources de rayonnement 22 sont agencées, le cas échéant, pour ne pas soumettre le col 7 et la bague à la chaleur émise par les sources de rayonnement 22. En effet, comme indiqué précédemment, seul le corps 5 de la préforme est formé pour produire le récipient 4. Par conséquent, le col 7 et la bague ne sont doivent pas être déformés au cours du formage et ne doivent pas être chauffés. Pour éviter le chauffage du col 7 et de la bague, l'unité de chauffage 11 peut comprendre un dispositif de ventilation positionné au droit des cols et des bagues pour évacuer la chaleur susceptible d'être absorbée par les cols et les bagues. Le dispositif de ventilation comprend par exemple au moins un ventilateur 15 piloté par l'unité de contrôle 28.

Chaque source de rayonnement 22 est formée par une lampe à incandescence émettant un rayonnement infrarouge.

Dans un autre mode de réalisation, chaque source de rayonnement 22 est une diode laser émettant un rayonnement infrarouge.

En d'autres termes, chaque source de rayonnement est un laser (par exemple des diodes laser) émettant dans l'infrarouge et organisés par juxtaposition et superposition pour former une ou plusieurs matrices.

En l'espèce, chaque matrice peut être une matrice de diodes laser à cavité verticale émettant par la surface (VCSEL), chaque diode émettant par exemple un faisceau laser d'une puissance unitaire de l'ordre du Watt à une longueur d'onde d'environ 1 µm.

Ces sources de rayonnement sont radiantes, c'est-à-dire que le rayonnement émis est transmis aux préformes 2 sans que l'air ne serve de vecteur de transmission.

Il va de soi que chaque source de rayonnement 22 pourra consister dans toute autre source de rayonnement sans pour autant sortir du cadre de l'invention.

L'unité de chauffage 11 comprend également une alimentation électrique 27 fournissant chaque source de rayonnement 22 en puissance électrique. Chaque source de rayonnement 22 convertit ainsi la puissance électrique qui leur est fournie en un rayonnement chauffant les préformes.

L'alimentation électrique 27 permet d'allumer (ou d'alimenter) ou d'éteindre chacune des sources de rayonnement 22 individuellement de sorte qu'il est possible de contrôler chacune des sources de rayonnement 22 et décider ainsi laquelle ou lesquelles seront utilisées le long du trajet pour chauffer les préformes défilant dans l'unité de chauffage 11. La répartition des sources de rayonnement allumées ou éteintes le long du trajet et selon la direction transversale est généralement désignée par le terme « mapping » (cartographie) des sources de rayonnement comme cela sera décrit dans la suite de la description.

La puissance électrique fournie aux sources de rayonnement 22 peut également être variable entre une puissance électrique maximale et une puissance électrique minimale efficace de la source de rayonnement 22. On entend par « puissance électrique maximale », la puissance électrique maximale à laquelle la source de rayonnement 22 peut être soumise sans être dégradée et on entend par « puissance électrique efficace minimale », la puissance électrique minimale à partir de laquelle la source de rayonnement 22 émet un rayonnement permettant de chauffer une préforme 2.

La puissance électrique s'exprime directement en puissance, c'est-à-dire, en watt ou en un pourcentage de la puissance électrique maximale de la source de rayonnement 22.

Comme représenté aux figures.1 et 2, l'unité de chauffage 11 comprend une unité de contrôle 28 reliée à l'alimentation électrique 27.

L'unité de contrôle 28 pilote l'alimentation électrique 27 par l'intermédiaire de variateurs 26 de puissance.

Les variateurs 26 de puissance permettent de faire varier la puissance électrique en entrée de la source de rayonnement 22 entre la puissance électrique maximale et la puissance électrique minimale efficace. Ces variateurs 26 peuvent être analogique ou électronique ;

L'unité de contrôle 28 peut contrôler avantageusement le ou les alimentations électriques 27 et/ou le ou les variateurs 26 de chaque source de rayonnement 22.

Comme représenté aux figures.1 et 2, l'unité de contrôle 28 comprend une mémoire 30 dans laquelle sont enregistrées au moins une consigne de puissance électrique pour au moins une ligne 24 de sources de rayonnement 22 et au moins une consigne d'épaisseur en au moins un point du récipient 4.

Lesdites consignes peuvent être enregistrées dans la mémoire 30 de l'unité de contrôle 28 par un opérateur.

Les consignes sont, par exemple, déterminées de manière empirique sur la base d'essais ou à partir de bases de données de précédentes préformes 2 chauffées en vue d'obtenir un récipient 4.

L'unité de contrôle 28 met en œuvre au moins une mesure d'épaisseur d'une paroi du récipient 4 en au moins un point au moyen d'au moins un capteur 32.

Le capteur 32 de mesure d'épaisseur est placé en sortie de l'unité de formage 6 pour mesurer en point l'épaisseur du récipient 4 qui vient d'être formé. Dans ce mode de réalisation, le capteur 32 est de type optique. Dans un autre mode de réalisation non représenté, le capteur de mesure d'épaisseur peut être placé dans le moule 10. Dans ce cas, le capteur peut être de type capacitif.

Pour avoir une bonne idée de la répartition matière du récipient 4 formé, il est avantageux de positionner plusieurs capteurs 32 sur la hauteur du récipient mesuré.

Pour chaque récipient 4, l'unité de contrôle 28 compare la mesure d'épaisseur obtenue par l'intermédiaire d'un capteur à la consigne d'épaisseur enregistrée correspondante à la même hauteur :
Si la mesure d'épaisseur et la consigne d'épaisseur sont identiques alors l'unité de contrôle 28 ne modifie pas les puissances électriques alimentant les lignes 24 de sources de rayonnement.

Par contre, si l'épaisseur mesurée est différente de la consigne d'épaisseur alors l'unité de contrôle 28 modifie la puissance électrique d'au moins deux lignes 24 de sources de rayonnement tout en maintenant identique la somme des puissances électriques alimentant toutes les lignes de sources de rayonnement.

En d'autres termes, on modifie la puissance électrique au minimum sur deux lignes 24 afin de pouvoir modifier une puissance électrique sur une ligne et d'ajuster la puissance électrique sur au moins une autre ligne, cela permet de maintenir la somme des puissances électriques de toutes les lignes identique.

En bref, les lignes 24 de sources de rayonnement 22 sont corrigées et compensées de façon à avoir la somme des puissances électriques des lignes 24 identique avant et après la modification.

En effet, si on ne modifie la puissance électrique que sur une seule ligne 24 alors l'unité de contrôle 28 sera dans l'incapacité de maintenir la somme des puissances électriques de toutes les lignes identique.

Avantageusement, l'unité de contrôle 28 modifie la puissance électrique d'au moins deux lignes 24 de sources de rayonnement 22 de façon homogène. On entend par le terme « homogène » le fait, par exemple, d'augmenter la puissance électrique d'une ligne d'une certaine valeur et de diminuer la puissance électrique d'une autre ligne 24 de cette même valeur et vice réciproquement.

Avantageusement, lorsque l'unité de contrôle 28 augmente d'une valeur déterminée la puissance électrique sur une ligne alors l'unité de contrôle diminue la puissance électrique sur les lignes restantes de la valeur déterminée, répartit sur le(s) ligne(s) restante(s).

Avantageusement, lorsque l'unité de contrôle 28 diminue d'une valeur déterminée la puissance électrique sur une ligne 24 alors l'unité de contrôle augmente la puissance électrique sur les lignes restantes de la valeur déterminée, divisée par le nombre de ligne(s) 24 restante(s).

De plus, ces modifications de puissance électrique se font de façon progressive au cours de la production de récipients 4 pour éviter un arrêt de l'installation à cause de récipient non conforme.

La figure 3 représente une configuration schématique d'une unité de chauffage 11 de préformes 3.

La configuration schématique montre une répartition d'un certain nombre de rectangles symbolisant des sources de rayonnement 22 disposées les unes à côté des autres, c'est-à-dire en ligne 24, et les unes aux dessus des autres, c'est-à-dire en colonne 34, et définissant ainsi une matrice.

Comme représenté sur la figure 3, dans la matrice, les rectangles peuvent être de trois couleurs différentes selon l'état de fonctionnement des sources de rayonnement 22 :
- un rectangle blanc 36 signifie que la source de rayonnement 22 est éteinte, c'est-à-dire, que la source de rayonnement n'est pas alimentée en puissance électrique. Par conséquent, cette source de rayonnement n'est pas régulée ;
- un rectangle noir 38 signifie que la source de rayonnement 22 est allumée, c'est-à-dire, que la source de rayonnement est alimentée à 100% de la puissance électrique maximale pour ce type de source de rayonnement. Par conséquent, cette source de rayonnement n'est pas régulée
- un rectangle gris 40 signifie que la source de rayonnement 22 est allumée, c'est-à-dire que la source de rayonnement est alimentée entre une puissance électrique maximale et une puissance électrique minimale efficace. Par conséquent, cette source de rayonnement 22 est régulée en puissance électrique.

Dans le cas particulier montré à la figure 3, la matrice de sources de rayonnement 22 comprend 12 colonnes 34 et 8 lignes 24 avec un certain nombre de sources de rayonnement éteintes, allumées et régulées.

La figure 3 montre une colonne de nombres à gauche 42 de la matrice, correspondant à la somme des puissances électrique (exprimée en pourcentage de la puissance maximale) alimentant les sources de rayonnement régulées et non régulées pour une ligne donnée.

La figure 3 montre également une colonne de nombres à droite 44 de la matrice, correspondant à la puissance électrique (exprimée en pourcentage de la puissance maximale) appliquée à chacune des sources de rayonnement régulées pour la ligne donnée.

Par exemple, pour la ligne « 8 » représentée à la figure 3, toutes les sources de rayonnement 22 sont éteintes.

Autre exemple, pour la ligne « 1 » représentée à la figure 3, les sources de rayonnement 22 situées aux colonnes 34 :
- 1, 2, 3, 4 et 12 sont éteintes,
- 5, 6 sont allumées à la puissance électrique maximale,
- 7, 8, 9, 10, 11 sont régulées, chacune à 80% de la puissance maximale à laquelle on applique un pourcentage général 46 de chauffe (ce pourcentage général de chauffe permet de maintenir une température de préforme constante malgré les perturbations extérieures par exemple les variations de température de l'atelier). La somme des puissances électrique des sources de rayonnement constituant la ligne est à 45%.

Avantageusement, sur une ligne 24 de sources de rayonnement 22, si au moins une source de rayonnement fonctionne à sa puissance électrique maximale 44, si l'unité de contrôle requiert une augmentation de puissance et si au moins une source de rayonnement 22 est éteinte sur la même ligne 24, alors l'unité de contrôle 28 allume l'une des sources de rayonnement 22 qui était éteinte et diminue la puissance électrique de chaque source de rayonnement régulée de la ligne tout en maintenant la somme des puissances électrique alimentant la ligne 24 de sources de rayonnement constante.

Avantageusement, sur une ligne 24 de sources rayonnement 22, si au moins une source de rayonnement fonctionne à une puissance électrique « minimum efficace », si l'unité de contrôle requiert une diminution de puissance alors l'unité de contrôle 28 éteint l'une des sources de rayonnement régulée et augmente la puissance électrique de chaque source de rayonnement 22 de la ligne 24 tout en maintenant la somme des puissances électrique alimentant la ligne 24 de sources de rayonnement constante.

## Revendications

1. Procédé de production de récipients en matériau thermoplastique à partir de préformes, qui définit un trajet de circulation des préformes (2) et des récipients (4), comprend :
- une unité de formage (6) de récipients d'axe vertical A comprenant au moins un poste de soufflage (8) incluant chacun un moule (10) à l'empreinte d'un récipient (4) et un dispositif d'injection (12) d'un fluide sous pression dans la préforme (2) ;
- une unité de chauffe (11) de préformes située sur le trajet de circulation en amont de l'unité de formage (6) par rapport au sens de circulation des préformes comprenant :
- un moyen de convoyage (14) des préformes comprenant une pluralité de supports (16) individuels pour les préformes définissant un trajet de chauffe des préformes ;
- une cavité de chauffe (18) comprenant deux parois (20) latérales face à face et distantes l'une de l'autre et au moins l'une de ces parois (20) étant celle qui supporte plusieurs sources de rayonnement (22) disposées les unes au-dessus des autres et les unes à côté des autres en regard des préformes (2) définissant ainsi une ligne (24) de sources de rayonnement (22) par rapport au trajet de chauffe des préformes (2);
- une alimentation électrique (27) fournissant chaque source de rayonnement (22) en puissance électrique ;
- une unité de contrôle (28) reliée à l'alimentation électrique (27), cette unité de contrôle (28) ayant une mémoire (30) dans laquelle sont enregistrée :
-au moins une consigne de puissance électrique pour au moins une ligne (24) de sources de rayonnement (22) ;
-au moins une consigne d'épaisseur en au moins un point du récipient (4) ;
-ladite unité de contrôle (28) met en œuvre au moins une mesure d'épaisseur (e) d'une paroi du récipient (4) en au moins un point dudit récipient (4) au moyen d'au moins un capteur ;
**Caractérisé en ce que** l'unité de contrôle 28):
- compare ladite mesure d'épaisseur (e) à ladite consigne d'épaisseur enregistrée ;
si ladite épaisseur mesurée (e)est différente de la consigne d'épaisseur alors l'unité de contrôle (28) modifie ladite puissance électrique d'au moins deux lignes (24) de sources de rayonnement (22) tout en maintenant identique la somme des puissances électrique alimentant toutes les lignes (24) de sources de rayonnement (22).

2. Procédé de production de récipients selon la revendication 1 **caractérisé en ce que** l'unité de contrôle (28) modifie ladite puissance électrique d'au moins deux lignes (24) de sources de rayonnement (22) de façon homogène.

3. Procédé de production de récipients selon la revendication 2 **caractérisé en ce que** lorsque l'unité de contrôle (28) augmente d'une valeur déterminée la puissance électrique sur une ligne (24) alors l'unité de contrôle (28) diminue la puissance électrique sur les lignes (24) restantes de la valeur déterminée, divisée par le nombre de ligne(s) restante(s).

4. Procédé de production de récipients selon la revendication 2 **caractérisé en ce que** lorsque l'unité de contrôle (28) diminue d'une valeur déterminée la puissance électrique sur une ligne (24) alors l'unité de contrôle (28) augmente la puissance électrique sur les lignes (24) restantes de la valeur déterminée, divisée par le nombre de ligne (24) restante.

5. Procédé de production de récipients selon la revendication 1 **caractérisé en ce que** sur une ligne (24) de sources de rayonnement (22), si au moins une source de rayonnement (22) fonctionne à sa puissance électrique maximale et si au moins une source de rayonnement (22) est éteinte sur la même ligne, alors l'unité de contrôle (28) allume l'une des sources de rayonnement (22) qui était éteinte et diminue la puissance électrique de chaque source de rayonnement (22) de la ligne (24) tout en maintenant la somme des puissances électrique alimentant la ligne de sources de rayonnement (22) constante.

6. Procédé de production de récipients selon la revendication 1 **caractérisé en ce que** sur une ligne (24) de sources rayonnement (22), si au moins une source de rayonnement (22) fonctionne à une puissance électrique « minimum efficace », alors l'unité de contrôle (28) éteint l'une des sources de rayonnement (22) et augmente la puissance électrique de chaque source de rayonnement (22) de la ligne (24) tout en maintenant la somme des puissances électrique alimentant la ligne de sources de rayonnement (22) constante.

7. Procédé de production de récipients selon l'une quelconque des revendications 1 à 6 **caractérisé en ce que** lesdites sources de rayonnement (22) sont des lampes halogènes émettant dans les IR.

8. Procédé de production de récipients selon l'une quelconque des revendications 1 à 6 **caractérisé en ce que** lesdites sources de rayonnement (22) sont des diodes laser émettant dans les IR.

9. Produit programme d'ordinateur comprenant une séquence d'instructions qui, lorsque le programme est exécuté par un ordinateur, conduit celui-ci à mettre en œuvre les étapes du procédé selon l'une quelconque des revendications 1 à 8.

## Patentansprüche

1. Verfahren zur Herstellung von Behältern aus thermoplastischem Material aus Vorformlingen, das einen Zirkulationsweg der Vorformlinge (2) und der Behälter (4) definiert, umfasst:
- eine Formeinheit (6) für Behälter mit vertikaler Achse A, umfassend mindestens eine Blasstation (8), die jeweils ein Formwerkzeug (10) mit dem Formnest für einen Behälter (4) und eine Einspritzvorrichtung (12) zum Einspritzen eines Fluids unter Druck in den Vorformling (2) beinhaltet;
- eine Heizeinheit (11) zum Erhitzen von Vorformlingen, die auf dem Zirkulationsweg stromauf einer Formeinheit (6) in Bezug auf die Zirkulationsrichtung der Vorformlinge gelegen ist, umfassend:
- ein Fördermittel (14) zum Fördern der Vorformlinge, umfassend eine Mehrzahl von einzelnen Halterungen (16) für die Vorformlinge, die einen Heizweg der Vorformlinge definieren;
- eine Heizkammer (18), umfassend zwei einander zugewandte und voneinander beabstandete seitliche Wände (20), wobei mindestens eine dieser Wände (20) diejenige ist, die mehrere Strahlungsquellen (22) trägt, die übereinander und nebeneinander gegenüber den Vorformlingen (2) angeordnet sind, so dass sie eine Reihe (24) von Strahlungsquellen (22) in Bezug auf den Heizweg der Vorformlinge (2) definieren;
- eine Stromversorgung (27), die jeder Strahlungsquelle (22) elektrische Leistung bereitstellt;
- eine Steuereinheit (28), die mit der Stromversorgung (27) verbunden ist, wobei diese Steuereinheit (28) einen Speicher (30) besitzt, in dem gespeichert sind:
- mindestens ein Sollwert elektrischer Leistung für mindestens eine Reihe (24) von Strahlungsquellen (22);
- mindestens ein Dickensollwert an mindestens einem Punkt des Behälters (4);
- wobei die Steuereinheit (28) mindestens eine Dickenmessung (e) einer Wand des Behälters (4) an mindestens einem Punkt des Behälters (4) mittels mindestens eines Sensors durchführt;
**dadurch gekennzeichnet, dass** die Steuereinheit (28):
- die Dickenmessung (e) mit dem gespeicherten Dickensollwert vergleicht;
wenn die gemessene Dicke (e) von dem Dickensollwert abweicht, die Steuereinheit (28) die elektrische Leistung von mindestens zwei Reihen (24) von Strahlungsquellen (22) ändert, wobei sie die Summe der elektrischen Leistungen, die alle Reihen (24) von Strahlungsquellen (22) versorgen, gleich bleiben lässt.

2. Verfahren zur Herstellung von Behältern nach Anspruch 1, **dadurch gekennzeichnet, dass** die Steuereinheit (28) die elektrische Leistung von mindestens zwei Reihen (24) von Strahlungsquellen (22) gleichartig ändert.

3. Verfahren zur Herstellung von Behältern nach Anspruch 2, **dadurch gekennzeichnet, dass**, wenn die Steuereinheit (28) einen bestimmten Wert der elektrischen Leistung an einer Reihe (24) erhöht, die Steuereinheit (28) die elektrische Leistung an den verbleibenden Reihen (24) um den bestimmten Wert, dividiert durch die Anzahl der verbleibenden Reihe(n), verringert.

4. Verfahren zur Herstellung von Behältern nach Anspruch 2, **dadurch gekennzeichnet, dass**, wenn die Steuereinheit (28) einen bestimmten Wert der elektrischen Leistung an einer Reihe (24) vermindert, die Steuereinheit (28) die elektrische Leistung an den verbleibenden Reihen (24) um den bestimmten Wert, dividiert durch die Anzahl der verbleibenden Reihen (24), erhöht.

5. Verfahren zur Herstellung von Behältern nach Anspruch 1, **dadurch gekennzeichnet, dass** an einer Reihe (24) von Strahlungsquellen (22), wenn mindestens eine Strahlungsquelle (22) mit ihrer maximalen elektrischen Leistung arbeitet und wenn mindestens eine Strahlungsquelle (22) an derselben Reihe ausgeschaltet wird, die Steuereinheit (28) eine der Strahlungsquellen (22) einschaltet, die ausgeschaltet war, und die elektrische Leistung jeder Strahlungsquelle (22) der Reihe (24) vermindert, wobei sie die Summe der elektrischen Leistungen, die die Reihe von Strahlungsquellen (22) versorgen, konstant bleiben lässt.

6. Verfahren zur Herstellung von Behältern nach Anspruch 1, **dadurch gekennzeichnet, dass** an einer Reihe (24) von Strahlungsquellen (22), wenn mindestens eine Strahlungsquelle (22) mit einer "minimalen effizienten" elektrischen Leistung arbeitet, die Steuereinheit (28) eine der Strahlungsquellen (22) ausschaltet und die elektrische Leistung jeder Strahlungsquelle (22) der Reihe (24) erhöht, wobei sie die Summe der elektrischen Leistungen, die die Reihe von Strahlungsquellen (22) versorgen, konstant bleiben lässt.

7. Verfahren zur Herstellung von Behältern nach einem der Ansprüche 1 bis 6, **dadurch gekennzeichnet, dass** die Strahlungsquellen (22) Halogenlampen sind, die im IR-Bereich emittieren.

8. Verfahren zur Herstellung von Behältern nach einem der Ansprüche 1 bis 6, **dadurch gekennzeichnet, dass** die Strahlungsquellen (22) Laserdioden sind, die im IR-Bereich emittieren.

9. Computerprogrammprodukt, umfassend eine Anweisungssequenz, die bei der Ausführung des Programms durch einen Computer diesen veranlasst, die Schritte des Verfahrens nach einem der Ansprüche 1 bis 8 durchzuführen.

## Claims

1. Method for producing containers made of thermoplastic material from preforms, which defines a path for circulating the preforms (2) and the containers (4), comprises:
- a moulding unit (6) for moulding containers having a vertical axis A comprising at least one blowing station (8), each including a mould (10) with a cavity in the shape of a container (4) and a device (12) for injecting a pressurized fluid into the preform (2);
- a heating unit (11) for heating preforms which is located on the circulation path upstream of the moulding unit (6) relative to the direction of circulation of the preforms, comprising:
- a means (14) for conveying the preforms comprising a plurality of individual supports (16) for the preforms defining a path for heating the preforms;
- a heating cavity (18) comprising two lateral walls (20) that face one another and are at a distance from one another, at least one of said walls (20) being that which bears a plurality of radiation sources (22) arranged one above the other and side by side facing the preforms (2), thereby forming a row (24) of radiation sources (22) relative to the path for heating the preforms (2);
- an electrical power supply (27), supplying each radiation source (22) with electrical power;
- a control unit (28) connected to the electrical power supply (27), said control unit (28) having a memory (30) for storing:
- at least one electrical power setpoint for at least one row (24) of radiation sources (22);
- at least one thickness setpoint in at least one point of the container (4);
- said control unit (28) carrying out at least one measurement of the thickness (e) of a wall of the container (4) at at least one point of said container (4) by means of at least one sensor;
**characterized in that** the control unit (28):
- compares said thickness measurement (e) with said stored thickness setpoint;
if said measured thickness (e) is different from the thickness setpoint, then the control unit (28) modifies said electrical power of at least two rows (24) of radiation sources (22) while keeping the sum of the electrical powers being supplied to all of the rows (24) of radiation sources (22) the same.

2. Method for producing containers according to Claim 1, **characterized in that** the control unit (28) modifies said electrical power of at least two rows (24) of radiation sources (22) in a homogeneous manner.

3. Method for producing containers according to Claim 2, **characterized in that** when the control unit (28) increases the electrical power on a row (24) by a specific value, then the control unit (28) reduces the electrical power on the remaining rows (24) by the specific value, divided by the number of remaining row(s).

4. Method for producing containers according to Claim 2, **characterized in that** when the control unit (28) reduces the electrical power on a row (24) by a specific value, then the control unit (28) increases the electrical power on the remaining rows (24) by the specific value, divided by the number of remaining rows (24).

5. Method for producing containers according to Claim 1, **characterized in that** on one row (24) of radiation sources (22), if at least one radiation source (22) operates at its maximum electrical power and if at least one radiation source (22) is switched off on the same row, then the control unit (28) switches on one of the radiation sources (22) which has been switched off and reduces the electrical power of each radiation source (22) of the row (24), while keeping the sum of the electrical powers being supplied to the row of radiation sources (22) constant.

6. Method for producing containers according to Claim 1, **characterized in that** on one row (24) of radiation sources (22), if at least one radiation source (22) operates at a "minimum effective" electrical power, then the control unit (28) switches off one of the radiation sources (22) and increases the electrical power of each radiation source (22) of the row (24), while keeping the sum of the electrical powers being supplied the row of radiation sources (22) constant.

7. Method for producing containers according to any one of Claims 1 to 6, **characterized in that** said radiation sources (22) are halogen lamps emitting in the infrared range.

8. Method for producing containers according to any one of Claims 1 to 6, **characterized in that** said radiation sources (22) are laser diodes emitting in the infrared range.

9. Computer program product comprising a sequence of instructions which, when the program is executed by a computer, results in the computer implementing the steps of the method according to any one of Claims 1 to 8.
